# EUROPEAN PATENT SPECIFICATION

(11) **EP 3 011 165 B1**
(45) Date of publication and mention of the grant of the patent: **18.04.2018**
(21) Application number: 14723862.0
(22) Date of filing: 09.05.2014
(51) Int. Cl.: F03B 13/10, F03B 17/06

(54) **TOOTHLESS YAW DRIVE FOR WATER CURRENT POWER GENERATOR**
ZAHNLOS AZIMUTANTRIEB FÜR WASSERKRAFTSTROMGENERATOR
TRANSMISSION À FRICTION POUR L'ORIENTATION EN AZIMUT D'HYDROLIENNES

(30) Priority: 18.06.2013 GB 201310817
(43) Date of publication of application: 27.04.2016
(73) Proprietor: Tidal Generation Limited, Stafford, ST17 4LX (GB)
(72) Inventor: VIGARS, Paul, Bristol Bristol BS1 3AG (GB)
(74) Representative: Brannen, Joseph Waclaw
(86) International application number: PCT/GB2014/051419
(87) International publication number: WO 2014/202945

(56) References cited:
- WO-A1-2012/089890
- GB-A- 2 441 769
- GB-A- 2 448 710

## Description

The present invention relates to the design of equipment for extracting energy from water currents. Specifically, the invention provides a water current power generation system and a method for aligning a water current power generation system with the current flow, such that it can be realigned on a periodic basis.

### BACKGROUND OF THE INVENTION

The direction of current flow in estuaries and tidal races usually changes according to a prescribed periodic pattern. As an example, tidal currents typically reverse direction by approximately 180 deg. roughly every six hours when the flood or ebb tides turn. As the tide is turning the current speed is very low or stationary for a short period of time around slack water. This invention seeks to take advantage of such a period of slow moving or stationary flow.

Proposed methods that allow a water current power generation system to accommodate significant changes in current direction on a periodic basis include:
*Mechanical Yaw Drive*: The turbine motor is yawed around using a geared drive mounted on the turbine nacelle, which reacts against the tower (or vice versa). Water borne particles and debris could cause fouling or wear of such a drive unless it is sealed from the external environment (which is technically challenging and expensive on a large diameter yaw bearing). The design requires tight control of mechanical tolerances between the moving gear and the stationary reaction gear.
*Fixed heading with full span pitch control*: This technique can be used where the current changes direction approximately 180 deg each current cycle. When the current direction changes each rotor blade is rotated 180deg about its respective lengthwise axis to face the opposite direction. In hydrodynamic terms this has the same effect as yawing the rotor through 180deg. This scheme has the drawback that the blades must operate in the wake of the support structure for one direction of the current flow. It also introduces efficiency losses and asymmetric rotor loading if the two current directions are not 180deg apart.
*Fixed rotor employing fixed pitch reverse flow blades*: The rotor blade aerofoil section is designed to allow the blades to operate with flow coming from opposite directions without adjusting their pitch or turning the rotor in any way. This can be achieved using a blade aerofoil section profile which is symmetric about both the local blade chord and vertical axes (an example would be a flattened ellipse profile). There will be significant efficiency losses associated with this design of blade section. Such a fixed blade pitch rotor will rely on hydrodynamic stall control to limit the output power, which does not provide a very controllable means of power regulation.
*Positively buoyant device tethered to seabed:* A fully submerged positively buoyant device (or group of rigidly connected devices) is tethered to the seabed. When the devices are generating they are supported mid water column by the balancing forces of turbine thrust, buoyancy, and the resultant tension in the mooring tethers. The level of the devices in the water column changes with the current speed and amount of thrust generated. When the current reverses direction the devices flip vertically over to point the other direction. The main disadvantage of this system is the potential for undesired dynamic response of the entire main body of the water current power generating device on its flexible moorings. This is of particular concern if there is any significant turbulence or wave induced fluctuations in the current flow. The tethered mooring arrangement also makes it more difficult to protect electrical power cables running from the turbines to the sea bed.

Other examples of previously-considered techniques are set out in patent applications GB2441769, GB2448710 and WO2012/089890.

### SUMMARY OF THE INVENTION

According to one aspect of the present invention, there is provided a water current power generating system comprising a water current power generating device capable of rotation relative to its sea or river bed support structure to face the oncoming current flow, in which the system comprises a mechanical connection between the main body of the water current power generating device and its support structure which allows a degree of freedom about a desired axis of rotation; and a toothless gear interface provided between the device and its support structure arranged for rotation of the device about the desired axis of rotation wherein the toothless gear interface comprises a toothless pinion gear provided by the main body of the water current power generating device and arranged in use to engage a toothless fixed gear provided by the support structure, characterised in that the toothless pinion gear is moveable from a disengaged position in which the toothless pinion gear (8) is spaced apart from the toothless fixed gear, and an engaged position in which the toothless pinion gear engages the toothless fixed gear.

According to a second aspect of the present invention, there is provided a method of re-orientating a water current power generating device of a water current power generation system as described herein, to face the oncoming flow, the method comprising waiting until the water current flow speed is sufficiently low that the hydrodynamic moment exerted by the current on the main body of the water current power generation device about the desired axis of rotation is less than the moment that can be exerted by the toothless gear interface of the system about the same axis; under these flow conditions, powering the toothless pinion gear to provide sufficient net torque to re-orientate the main body of the water current power generating device about the desired axis of rotation until it faces the new current flow direction.

The system of the present invention has the advantage that the interface has no teeth and therefore does not require the teeth to be aligned in order to operate. The system of the present invention is therefore easier to assemble and deploy in underwater environments.

The toothless gear interface is typically operated during periods when the flow is stationary or slow moving, thereby reducing the hydrodynamic forces acting on the main body of the water current power generating device due to the current flow. This therefore advantageously reduces the torque required to be provided by the gear interface in order to rotate the device.

The toothless gear interface preferably comprises a toothless pinion gear arranged in use to engage a toothless fixed gear. The toothless pinion gear is preferably positioned on the main body of the device. The toothless fixed gear is preferably provided by the support structure. The toothless pinion gear may comprise at least one wheel or roller. For example, the toothless pinion gear may comprise two spaced apart wheels or rollers, for example located on opposing sides of the gear interface. The rotational axis of the pinion gear preferably extends in a radial direction.

The toothless gear interface, for example the toothless pinion gear and toothless fixed gear, is preferably arranged to provide sufficient torque about the desired axis of rotation to re-orientate the device to face the new direction of current flow. The reaction torque may be provided by the friction of the toothless pinion gear on the toothless fixed gear.

The toothless gear interface is preferably powered electrically, hydraulically or pneumatically. The system preferably further comprises a motor for driving the toothless pinion gear. The motor may be a hydraulic, electric or pneumatic motor. The drivetrain may also include a gearbox.

The motor may be located in any suitable location for powering the toothless gear interface. For example, the motor is preferably mounted on the main body of the water current power generation system.

Preferably, the reaction torque provided by the toothless gear interface, for example the friction of the toothless pinion gear on the toothless fixed gear, is sufficient to overcome the bearing friction, inertia, hydrodynamic forces and in certain cases weight and buoyancy forces acting on the water current power generating device.

For example, the toothless pinion gear and/or the toothless fixed gear may be moveable in a direction substantially parallel to the desired axis of rotation. The toothless pinion may be moveable in a radial direction to act on the inner surface of the support structure, or for example an inserted piece within the support structure, such as for example a cartridge plate. The toothless pinion gear and/or the toothless fixed gear may be moveable between the engaged/disengaged position by any suitable mechanism, such as for example by an actuator. The toothless pinion gear and the toothless fixed gear may be brought into engagement with each other during assembly of the structure. For example, the pinion gear may be brought into engagement with the fixed gear when the main body of the water current power generation system is engaged with the support structure.

The toothless fixed gear may be sufficiently retained within the support structure so that in the engaged position the fixed gear is capable of transmitting the torque exerted by the toothless pinion gear to the mounting portion of the power generation system. The fixed gear may for example be frictionally retained within the support structure. The support structure may provide at least one retaining means operable to provide releasable engagement of the fixed gear with the support structure. The at least one retainment means may comprise at least one locking actuator. The fixed gear is preferably removable from the support structure. The fixed gear may be provided by a substantially planar plate.

The toothless pinion gear may be mechanically biased towards the fixed gear during engagement in order to maintain a certain degree of contact between the pinion gear and the fixed gear regardless of build and assembly tolerances. Furthermore, the mechanical biasing ensures that contact is maintained for a system in which for example the device lifts slightly away from the support structure in order to yaw, such as for example with buoyant devices. The pinion gear may be attached to a support arm. The support arm may be composed of compliant material such as elastomers, for example rubber. The pinion gear or support arm may be spring biased.

The toothless gear interface preferably provides a high friction interface. The high friction interface could be achieved by the use of specific materials and surface finishes. At least one of the pinion gear and the fixed gear, or both, preferably comprises a plurality of macrofeatures to aid traction. The macrofeatures may be any suitable features for improving the traction between the pinion gear and the fixed gear. For example, the macrofeatures may be ridges or tyre grip like features.

The mechanical connection between the main body and the support structure may be a rotational bearing. The main body of the device may be attached to the support structure by a single vertical axis yaw bearing.

The main body of the device preferably comprises a mounting portion defining a substantially continuous mounting surface which extends substantially completely around the mounting portion. The support structure preferably defines a substantially continuous support surface which extends substantially completely around the support structure. The mounting surface and support structure are preferably arranged to abut one another substantially continuously when the power generation system is mounted on the support structure.

The system may further comprise at least one position stop arranged in use to control the orientation, for example the final orientation, of the main body of the device relative to the support structure. The orientation of the main body of the device can be clamped or mechanically locked relative to its support structure after the main body has been reoriented.

The method of orientating the device may further comprise powering the pinion until the main body or a part of the system connected to the main body comes up against position stops which prevent further rotational movement in that direction. The method may further comprise clamping or mechanically locking the main body of the device relative to its support structure after the re-orientation is complete for the purposes of maintaining a constant orientation whilst generating electricity. The main body of the device may be released or mechanically locked again to effect subsequent further changes in its orientation.

### BRIEF DESCRIPTION OF THE DRAWINGS

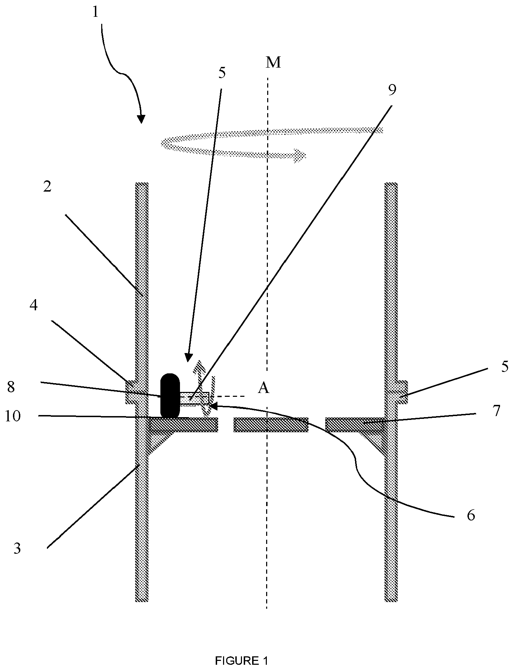

Figure 1 illustrates a cross-sectional view of a portion of the water current power generation system according to one embodiment of the present invention.

### DETAILED DESCRIPTION OF THE PREFERRED EMBODIMENTS

With reference to Figure 1, the water current power generating system 1 comprises a tidal turbine device (not shown) comprising a mounting portion 2 defining a mounting axis M for the device. The device is capable of rotation about rotational axis M relative to its sea or river bed support structure 3 to face the oncoming current flow. The mounting portion 2 has a mounting flange 4 which engages with an associated support flange 5 provided by the support structure 3. The mounting and support flanges 4 and 5 allow the device to be affixed to the support structure 3 in an appropriate manner. A mechanical connection is provided between the mounting portion 2 of the water current power generating device and its support structure 3 which allows a degree of freedom about the desired axis of rotation M. The mechanical connection is a rotational bearing.

The mounting portion 2 may have any suitable shape. For example, the mounting portion 2 may be substantially circular in cross-section. The mounting portion 2 may provide an aperture therethrough. The mounting portion 2 is a hollow cylinder, but could be provided by any suitable shape. It will be appreciated that the mounting portion 2 need not be circular in cross section, but may be provided by any suitable shape. For example, the mounting portion 2 may be tapered, such as for example the mounting portion may be in the form of a truncated cone. The mounting portion may be a hollow prism.

The system may further comprise a coupling (not shown) arranged in use to be moveable between a clamping position and a bearing position. In the clamping position, the device is fixedly located with respect to the support structure. As a result, in the clamping position, the coupling prevents rotation of the device about the mounting axis M. In the bearing position, the device may be rotated about the mounting axis of the system.

The support structure 3 is substantially cylindrical, and defines a circular aperture therethrough. It will be readily appreciated that, as for the mounting portion 2 of the device, the support structure 3 can be of any suitable shape and cross section.

The support structure 3 includes a support flange 5 which defines a substantially circular and substantially continuous support surface onto which the mounting flange 4 of the mounting portion 2 abuts when the device is mounted on the support structure 3.

The mounting portion transfers the load of the device onto the support structure. The substantially circular and substantially continuous nature of the mounting and support flanges serves to distribute the loads around the support structure, and to remove, or substantially reduce, the occurrence of point loading on the support structure.

The substantially circular and substantially continuous nature of the mounting flange of the device and of the support flange of the support structure enables the mounting portion 2 to be located on the support structure 3 in any polar orientation with respect to the mounting axis M.

In addition, this polar mounting freedom of the power generation unit enables the location and orientation of the support structure to be simplified, since the polar orientation of the support housing is not important when the power generating unit can be mounted, and then operated, in any polar orientation with respect to the support structure.

A toothless gear interface is provided between the device 1 and its support structure 3 arranged for rotation of the device about the desired axis of rotation M.

The toothless gear interface comprises a toothless pinion gear 6 provided on the main body 4 of the water current power generating device and arranged in use to engage a toothless fixed gear 7 provided by the support structure 3. The gear interface is toothless and therefore does not require alignment of teeth of the main body component and the support structure component. The system is therefore more easily assembled and operated compared to conventional systems. The system of the present invention is also not effected by grit becoming trapped in the teeth or eroding the teeth of a gear interface. Furthermore, the system may also be immersed without sealing which greatly simplifies the deployment process. The ability to mount the device on the support structure in any polar orientation without requiring alignment of the teeth of a pinion gear with a fixed gear simplifies the deployment of the device to the support structure. This is because there is no requirement to orient the device as it descends into its mounting position on the support structure.

The toothless pinion gear 6 comprises a wheel 8 attached to a support member 9. The fixed gear 7 comprises a cartridge plate 10. The contact surface of the fixed gear 7 provides a series of ridges (not shown) for increasing the traction between the fixed gear 7 and wheel 8. The support member 9 is composed of a compliant material such as for example elastomer for biasing the wheel 8 towards the contact surface of the fixed gear 7. As the pinion gear 6 is biased to engage the fixed gear 7, the system 1 of the present invention ensures a certain degree of contact between the gears 6,7 whilst allowing for build and assembly tolerances. The system of the present invention may also be used with tidal turbines which separate slightly from the support structure 3 in use in order to yaw, such as for example buoyant turbines.

The toothless pinion gear 6 is moveable from a disengaged position in which the pinion gear 6 is spaced apart from the fixed gear 7; and an engaged position in which the pinion gear 6 engages the fixed gear 7. The pinion gear 6 is powered by a hydraulic motor (not shown) mounted on the turbine.

In use, the mounting portion 2 of the device is brought into contact with the support 3. A rotational bearing is formed between the mounting flange 4 and the support flange 5. During assembly, the wheel 8 of the pinion gear 6 is moved to engage the cartridge plate 10 of the fixed gear 7. By contacting the mounting portion 2 of the device with the support 3, the wheel 8 moves in a direction substantially parallel to the desired axis of rotation M to contact the cartridge plate 10.

When the current flow speed is sufficiently low, the hydraulic motor (not shown) powers the pinion gear 6. The wheel 8 rotates about rotational axis A. The rotational axis A extends in a radial direction. The reaction torque is provided by the friction of the wheel on the cartridge plate 10.

The reaction torque provided by the friction of the toothless pinion gear 6 on the toothless fixed gear 7 is greater than the bearing friction, inertia, and hydrodynamic forces and in certain cases weight and buoyancy forces acting on the water current power generating device. The mounting portion 2 of the device therefore begins to rotate about the rotational axis M. Once aligned in the correct position, the motor stops powering the pinion gear 6. The system may further include one or more position stops to control the orientation, for example the final orientation, of the main body of the device relative to the support structure. The device may be locked in the correct alignment by a releasable locking mechanism (not shown) such as for example a clamping mechanism (not shown).

Although aspects of the invention have been described with reference to the embodiment shown in the accompanying drawings, it is to be understood that the invention is not limited to the precise embodiment shown and that various changes and modifications may be effected without further inventive skill and effort.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A water current power generation system (1) comprising a water current power generating device (2) capable of rotation relative to its sea or river bed support structure (3) to face the oncoming current flow, in which the device comprises:
a mechanical connection between the main body of the water current power generating device (2) and its support structure (3) which allows a degree of freedom about the desired axis of rotation (M); and
a toothless gear interface (8, 9, 10) provided between the device (2) and its support structure (3) arranged for rotation of the device (2) about the desired axis of rotation (M),
wherein the toothless gear interface (8, 9, 10) comprises a toothless pinion gear (8) provided by the main body of the water current power generating device (2) and arranged in use to engage a toothless fixed gear (10) provided by the support structure (3),
**characterised in that** the toothless pinion gear (8) is moveable from a disengaged position in which the toothless pinion gear (8) is spaced apart from the toothless fixed gear (10), and an engaged position in which the toothless pinion gear (8) engages the toothless fixed gear (10).

2. A system as claimed in claim 1, in which the toothless pinion gear (8) comprises at least one wheel or roller.

3. A system as claimed in claim 1 or 2, further comprising a motor for driving the toothless pinion gear (8).

4. A system as claimed in claim 3, in which the motor is mounted on the main body of the water generating device (2).

5. A system as claimed in any one of the preceding claims, in which the toothless pinion gear (8) is moveable in a direction substantially parallel to the desired axis of rotation (M).

6. A system as claimed in any one of the preceding claims, in which the toothless pinion gear (8) is moveable in a radial direction to act on the cylindrical inner surface of the support structure (3).

7. A system as claimed in any one of the preceding claims, in which the toothless pinion gear (8) is brought into engagement with the fixed gear (10) on engagement of the device (2) with the support structure (3).

8. A system as claimed in any one of the preceding claims, in which the toothless fixed gear (10) is provided by an upper surface of the support structure (3).

9. A system as claimed in any one of the preceding claims, in which the support structure (3) comprises a cartridge plate providing the toothless fixed gear (10).

10. A system as claimed in any one of the preceding claims, in which the toothless pinion gear (8) is mechanically biased towards the toothless fixed gear (10) during engagement.

11. A system as claimed in any one of the preceding claims, further comprising at least one position stop for controlling the final orientation of the device (2) relative to the support structure (3).

12. A system as claimed in any one of the preceding claims, in which the orientation of the device (2) can be clamped or mechanically locked relative to its support structure (3) after the main body has been reoriented.

13. A method of re-orientating a water current power generation system of a water generating system as claimed in any one of claims 1 to 12, to face the oncoming flow, the method comprising:
waiting until the water current flow speed is sufficiently low that the hydrodynamic moment exerted by the current on the main body of the water generating device (2) about the desired axis of rotation is less than the moment that can be exerted by the toothless gear interface (8, 9, 10) of the system about the same axis;
under these flow conditions, powering the toothless pinion gear (8) to provide sufficient net torque to re-orientate the main body of the water current power generating device (2) about the desired axis of rotation until it (2) faces the new current flow direction.

14. A method as claimed in claim 13, further comprising:
powering the toothless pinion gear (8) until the main body of the device (2) comes up against position stops which prevent further rotational movement in that direction.

## Patentansprüche

1. Wasserkraft-Stromgenerationssystem (1), umfassend eine Wasserkraft-Stromgenerationsvorrichtung (2), die sich in Bezug auf ihre Meeres- oder Flussbett-Tragstruktur (3) drehen kann, um dem entgegenkommenden Stromfluss zugewandt zu sein, wobei die Vorrichtung umfasst:
eine mechanische Verbindung zwischen dem Hauptkörper der Wasserkraft-Stromgenerationsvorrichtung (2) und seiner Tragstruktur (3), die einen Grad an Freiheit um die gewünschte Drehachse (M) zulässt; und
eine zahnlose Getriebe-Schnittstelle (8, 9, 10), bereitgestellt zwischen der Vorrichtung (2) und ihrer Tragstruktur (3), die angeordnet ist, um die Vorrichtung (2) um die gewünschte Drehachse (M) zu drehen,
wobei die zahnlose Getriebe-Schnittstelle (8, 9, 10) ein zahnloses Ritzel (8) umfasst, das durch den Hauptkörper der Wasserkraft-Stromgenerationsvorrichtung (2) bereitgestellt wird und bei Verwendung zum Eingriff mit einem zahnlosen feststehenden Rad (10), das durch die Tragstruktur (3) bereitgestellt ist, angeordnet ist,
**dadurch gekennzeichnet, dass** das zahnlose Ritzel (8) von einer ausgerückten Position, in der das zahnlose Ritzel (8) von dem zahnlosen feststehenden Rad (10) beabstandet ist, und einer Eingriffsposition, in der das zahnlose Ritzel (8) in das zahnlose feststehende Rad (10) eingreift, beweglich ist.

2. System nach Anspruch 1, wobei das zahnlose Ritzel (8) mindestens ein Rad oder eine Walze umfasst.

3. System nach Anspruch 1 oder 2, weiter umfassend einen Motor zum Antreiben des zahnlosen Ritzels (8).

4. System nach Anspruch 3, wobei der Motor an dem Hauptkörper der Wasser-Generationsvorrichtung (2) angebracht ist.

5. System nach einem der vorstehenden Ansprüche, wobei das zahnlose Ritzel (8) in einer Richtung beweglich ist, die im Wesentlichen parallel zur gewünschten Drehachse (M) ist.

6. System nach einem der vorstehenden Ansprüche, wobei das zahnlose Ritzel (8) in einer radialen Richtung beweglich ist, um auf die innere zylindrische Oberfläche der Tragstruktur (3) einzuwirken.

7. System nach einem der vorstehenden Ansprüche, wobei das zahnlose Ritzel (8) in Eingriff mit dem feststehenden Rad (10) bei Eingriff der Vorrichtung (2) mit der Tragstruktur (3) gebracht wird.

8. System nach einem der vorstehenden Ansprüche, wobei das zahnlose feststehende Rad (10) von einer oberen Oberfläche der Tragstruktur (3) bereitgestellt wird.

9. System nach einem der vorstehenden Ansprüche, wobei die Tragstruktur (3) eine Kartuschenplatte umfasst, die das zahnlose feststehende Rad (10) bereitstellt.

10. System nach einem der vorstehenden Ansprüche, wobei das zahnlose Ritzel (8) während des Eingriffs mechanisch in Richtung des zahnlosen feststehenden Rades (10) vorgespannt ist.

11. System nach einem der vorstehenden Ansprüche, weiter mindestens einen Positionsstopp zum Steuern der endgültigen Ausrichtung der Vorrichtung (2) in Bezug auf die Tragstruktur (3) umfassend.

12. System nach einem der vorstehenden Ansprüche, wobei die Ausrichtung der Vorrichtung (2) in Bezug auf die Tragstruktur (3) geklemmt oder mechanisch verriegelt werden kann, nachdem der Hauptkörper neu ausgerichtet worden ist.

13. Verfahren zur Neuausrichtung eines Wasserkraft-Stromgenerationssystems eines Wasser-Generationssystems nach einem der Ansprüche 1 bis 12, um dem entgegenkommenden Fluss zugewandt zu sein, wobei das Verfahren umfasst:
Warten, bis die Wasserkraft-Flussgeschwindigkeit ausreichend niedrig ist, damit das hydrodynamische Moment, das durch die Kraft auf den Hauptkörper der Wasser-Generationsvorrichtung (2) um die gewünschte Drehachse ausgeübt wird, geringer als das Moment ist, das durch die zahnlose Getriebe-Schnittstelle (8, 9, 10) des Systems um die gleiche Achse ausgeübt werden kann;
unter diesen Flussbedingungen, Antreiben des zahnlosen Ritzels (8), um ein ausreichendes Nettodrehmoment bereitzustellen, um den Hauptkörper der Wasserkraft-Stromgenerationsvorrichtung (2) um die gewünschte Drehachse neu auszurichten, bis sie (2) der neuen Stromflussrichtung zugewandt ist.

14. Verfahren nach Anspruch 13, weiter umfassend:
Antreiben des zahnlosen Ritzels (8), bis der Hauptkörper der Vorrichtung (2) gegen Positionsstopps stößt, die eine weitere Drehbewegung in diese Richtung verhindern.

## Revendications

1. Système de génération d'énergie de courant d'eau (1) comprenant un dispositif de génération d'énergie de courant d'eau (2) capable de rotation par rapport à sa structure de support sur lit marin ou sur lit de rivière (3) pour s'orienter vers le flux du courant entrant, dans lequel le dispositif comprend :
un raccord mécanique entre le corps principal du dispositif de génération d'énergie de courant d'eau (2) et sa structure de support (3) qui permet un degré de liberté autour de l'axe de rotation souhaité (M) ; et
une interface d'engrenage sans dent (8, 9, 10) fournie entre le dispositif (2) et sa structure de support (3) agencée à des fins de rotation du dispositif (2) autour de l'axe de rotation souhaité (M),
dans lequel l'interface d'engrenage sans dent (8, 9, 10) comprend un engrenage à pignon sans dent (8) fourni par le corps principal du dispositif de génération d'énergie de courant d'eau (2) et agencé en fonctionnement pour venir en prise avec un engrenage fixe sans dent (10) fourni par la structure de support (3),
**caractérisé en ce que** l'engrenage à pignon sans dent (8) peut passer d'une position sans prise dans laquelle l'engrenage à pignon sans dent (8) est espacé de l'engrenage fixe sans dent (10), à une position de prise dans laquelle l'engrenage à pignon sans dent (8) vient en prise avec l'engrenage fixe sans dent (10).

2. Système selon la revendication 1, dans lequel l'engrenage à pignon sans dent (8) comprend au moins une roue ou un galet.

3. Système selon la revendication 1 ou 2, comprenant en outre un moteur pour entraîner l'engrenage à pignon sans dent (8).

4. Système selon la revendication 3, dans lequel le moteur est monté sur le corps principal du dispositif de génération d'eau (2).

5. Système selon l'une quelconque des revendications précédentes, dans lequel l'engrenage à pignon sans dent (8) peut être déplacé dans une direction sensiblement parallèle à l'axe de rotation souhaité (M).

6. Système selon l'une quelconque des revendications précédentes, dans lequel l'engrenage à pignon sans dent (8) peut être déplacé dans une direction radiale pour agir sur la surface interne du cylindre de la structure de support (3).

7. Système selon l'une quelconque des revendications précédentes, dans lequel l'engrenage à pignon sans dent (8) est amené en prise avec l'engrenage fixe (10) lors de la mise en prise du dispositif (2) avec la structure de support (3).

8. Système selon l'une quelconque des revendications précédentes, dans lequel l'engrenage fixe sans dent (10) est fourni par une surface supérieure de la structure de support (3).

9. Système selon l'une quelconque des revendications précédentes, dans lequel la structure de support (3) comprend une plaque de cartouche fournissant l'engrenage fixe sans dent (10).

10. Système selon l'une quelconque des revendications précédentes, dans lequel l'engrenage à pignon sans dent (8) présente un biais mécanique vers l'engrenage fixe sans dent (10) au cours de la prise.

11. Système selon l'une quelconque des revendications précédentes, comprenant en outre au moins une position d'arrêt pour déterminer l'orientation finale du dispositif (2) par rapport à la structure de support (3).

12. Système selon l'une quelconque des revendications précédentes, dans lequel l'orientation du dispositif (2) peut être clavetée ou verrouillée mécaniquement par rapport à sa structure de support (3) après que le corps principal a été réorienté.

13. Procédé de réorientation d'un système de génération d'énergie de courant d'eau d'un système de génération d'eau selon l'une quelconque des revendications 1 à 12, pour l'orienter vers le flux entrant, le procédé comprenant :
l'attente jusqu'à ce que la vitesse du flux de courant d'eau soit suffisamment faible pour que le moment hydrodynamique exercé par le courant sur le corps principal du dispositif de génération d'eau (2) autour de l'axe de rotation souhaité soit inférieur au moment qui peut être exercé par l'interface d'engrenage sans dent (8, 9, 10) du système autour du même axe ;
dans ces conditions de flux, l'alimentation de l'engrenage à pignon sans dent (8) pour fournir un couple net suffisant pour réorienter le corps principal du dispositif de génération d'énergie de courant d'eau (2) autour de l'axe de rotation souhaité jusqu'à ce qu'il (2) soit orienté dans la direction du nouveau flux du courant.

14. Procédé selon la revendication 13, comprenant en outre :
l'alimentation de l'engrenage à pignon sans dent (8) jusqu'à ce que le corps principal du dispositif (2) vienne contre des positions d'arrêt qui empêchent un mouvement rotationnel supplémentaire dans cette direction.
